# EUROPEAN PATENT SPECIFICATION

(11) **EP 1 842 331 B1**
(45) Date of publication and mention of the grant of the patent: **14.05.2008**
(21) Application number: 06700017.4
(22) Date of filing: 11.01.2006
(51) Int. Cl.: H04L 12/18, H04L 29/06

(54) **METHOD OF AUTHENTICATING MULTICAST MESSAGES**
VERFAHREN ZUM AUTHENTIFIZIEREN VON MULTICAST-NACHRICHTEN
PROCÉDÉ POUR L'AUTHENTIFICATION DE MESSAGES DE MULTIDIFFUSION

(30) Priority: 12.01.2005 EP 05405012
(43) Date of publication of application: 10.10.2007
(73) Proprietor: ABB RESEARCH LTD., 8050 Zürich (CH)
(72) Inventor: DZUNG, Dacfey, CH-5430 Wettingen (CH)
(74) Representative: ABB Patent Attorneys
(86) International application number: PCT/CH2006/000020
(87) International publication number: WO 2006/074567

(56) References cited:
- US-A- 6 092 191
- US-B1- 6 643 773
- US-B1- 6 725 276

## Description

### FIELD OF THE INVENTION

The invention relates to the field of message authentication in communication networks with multicast-enabled routers or switches.

### BACKGROUND OF THE INVENTION

Novel types of group communication, like multiparty videoconferencing and real-time push-based information delivery systems such as stock quote services require multicast to minimize the volume of network traffic they generate. Conceptually, multicast-enabled routers take each packet sent over a multicast channel and route it to every receiver listening on that channel. The set of senders and receivers on a particular multicast channel is called a multicast group. Multicast allows a sender to send a data packet to the multicast group by using a destination address to which all group members listen. This allows a more efficient use of the communication network than by addressing each receiver of the multicast group individually.

For *encrypted* multicast, a group key is distributed - using separate secure means - to all members of the multicast group, including the sender(s). This shared secret can then be used to encrypt the multicast packet, so that no one outside the group can eavesdrop. For the purpose of *authentication*, a secret shared by *all* group members can only be used to verify that the multicast packet was sent by some group member and has not been injected by someone outside the secure group. Message-authentication however attempts to prove that a message is indeed generated from the claimed source, and thus could also be called a source-authentication of the message. It typically includes a proof that its content has not been tampered with, and thus certifies the integrity of the message.

The use of a shared secret-key based Message Authentication Code (MAC) is an efficient cryptographic solution for authentication on a group level. The messages are sent with a message authentication code (MAC), also known as a message integrity code, integrity check value, cryptographic checksum or keyed hash that may be calculated by first calculating a hash value or a message digest which depends on all the bits of the message. This value or digest is subsequently encrypted, using a secret key known to the members of the multicast group or by means of a similar MAC algorithm. However, as outlined in the preceding paragraph, inadequacies may arise because any registered receiver knowing the secret key may masquerade as a registered sender and thus generate fake or tampered messages with valid MACs.

The most desirable form of authentication allows registered receivers to precisely identify the registered *individual* sender who sent each received packet. State of the art solutions for such a kind of "source authentication" involve extending and modifying the standard cryptographic packet authentication schemes as described e.g. in the article "A survey of security issues in multicast communications," M.J. Moyer, J.R. Rao, and P. Rohatgi, IEEE Network, Vol. 13, no. 6, November/December 1999, pp.12-23. The following two schemes require complex modifications of the cryptographic algorithms in each sender and receiver of multicast packets, and do not comply with the requirement that the authentication information should be of restricted size and inexpensive to generate and verify.
(1.) The sender adds its own signature, signed with its own private key; all receivers can verify the signature using the known public key of the sender. This solution obviously works in a fully unreliable environment and protects against message spoofing and collusion attacks as described in the following paragraph, but is computationally rather expensive and requires secure distribution of the public key of each possible sender.
(2.) The sender adds multiple Message Authentication Codes (MAC), each based on a different key as a shared secret. This collection of appended MACs is known as an asymmetric MAC. Each member of the multicast group knows only a subset of all keys, and preferably, no subgroup of N receivers should know all the keys known by any other receiver. A receiver can verify only those MACs of which it knows the secret keys; if all these MACs are valid, the receiver accepts the message as genuine. A single receiver cannot by itself forge an asymmetric MAC, as it does not know all the keys of a sender or even all the keys known to some other recipient. Only a subgroup of more than N receivers could collude to forge an asymmetric MAC to fool some other receiver. By proper allocation of the subset of keys, this may be sufficient to authenticate the packet source with high probability.

US 6,725,276 is concerned with the transmission of messages between a first and a second multicast domain. A first border router authenticates the messages via the first-domain MAC generated and appended to the messages by a sending router. The border router then adds a second or intermediate MAC to the message before transmitting it to a second border router. By authenticating the intermediate message, the second router confirms that the message originated from the sending router in the first domain

### DESCRIPTION OF THE INVENTION

It is therefore an objective of the invention to inexpensively authenticate the source of a multicast message transmitted to a destination over a routed network. This objective is achieved by a method of authenticating a source of a multicast message and a router for routing multicast messages according to the claims 1 and 8. Further preferred embodiments are evident from the dependent patent claims.

The invention makes use of the fact that in routed communication networks, messages pass through routers which, on reception of multicast packets, duplicate and forward these packets towards the members ofa multicast group In some kind of "distributed authentication scheme", these multicast capable routers are tasked to support the packet source authentication: On reception of a multicast packet, the router attests the authenticity of the sender of the packet, and adds corresponding authentication information to the packet, before forwarding it in the normal multicast manner. Any receiver of the multicast packet then uses the authentication information collected by the packet while traversing the network to verify the original packet source.

For the purpose of the present invention, a *routed communication network* is any wide or local area network including at least one router, switch or other active intelligent intermediary for forwarding messages. On the other hand, a local broadcast medium such as a bus wire or wireless transmission, where the medium itself provides for the multicasting, is not considered a routed network. Furthermore, in the context of the present invention, the *authentication of the sender* of a message, i.e. its original source or any forwarding router, includes any or all of the authentication of the sender, the authentication of the content of the message, or the authentication of the content of the information added by any forwarding router.

According to the invention, the authentication information about the multicast source is contributed through the first router along the transmission path. Said first router receiving the multicast packet from the source may use local information on the sender, such as local source addresses and router interface number or switch port number, to verify the authenticity of the source. It may even perform some local individual entity authentication of the source The first router adds authentication information including some estimated level of trustworthiness of the authentication of the source to the packet. In general, the router may have more means to verify source authenticity than the final receivers. The latter in turn verifies, potentially via further intermediate routers, the authenticity of the first router. From this and from some source-authenticity information added to the message by the first router, the final receiver is able to confirm the authenticity of the source.

In a preferred embodiment of the invention, the source adds a Message Authentication Code (MAC) to the message, permitting the first router to validate its authenticity.

It is assumed that it is more difficult and less likely to compromise routers than to compromise individual senders attempting to spoof multicast packets. Nevertheless, in a preferred variant of the invention, the authentication information added by the routers is protected via a further message authentication code. Advantageously, this further code is based on a separate router key, such that subsequent routers do not need to share a message authentication key with the source.

Intermediate routers may or may not add their own authentication information to the packet. Several ways for routers to collect this authentication information can be envisaged, and the information may include some estimated level of trustworthiness of the authentication On the other hand, the information may be of binary manner and comprised in the aforementioned message authentication code added to the forwarded message by the routers.

### BRIEF DESCRIPTION OF THE DRAWINGS

The subject matter of the invention will be explained in more detail in the following text with reference to preferred exemplary embodiments which are illustrated in the attached drawings, of which:
- Fig.1: depicts a routed network comprising several multicast participants, and
- Fig 2: shows a multicast packet with header fields according to the invention.

### DETAILED DESCRIPTION OF PREFERRED EMBODIMENTS

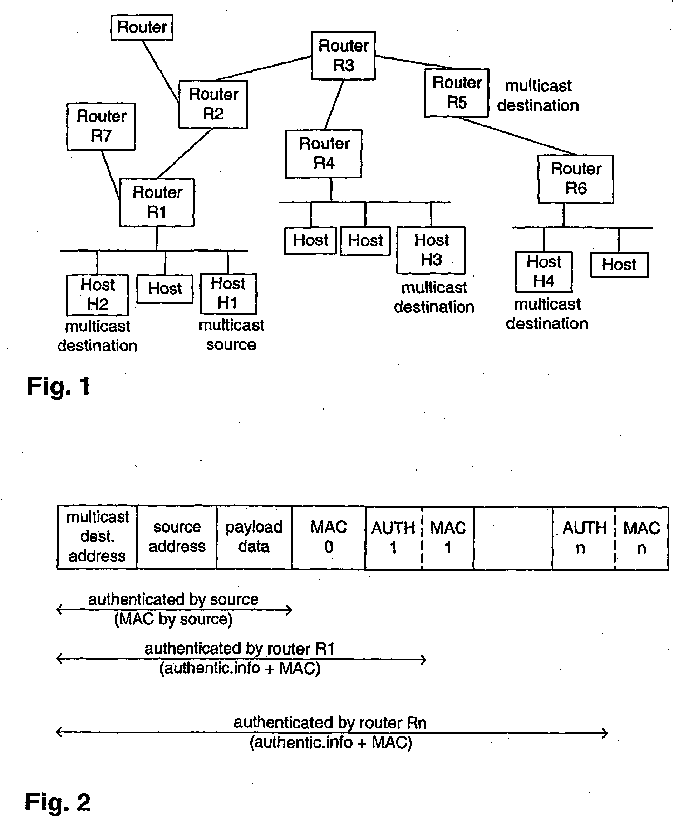

Fig.1 shows an exemplary IP network with multicast IP routers carrying multicast data packets. Host H1 as part of a first subnet is connected to a first router R1 representing its gateway router to the rest of the network. Host H1 is the source of the multicast packet The first router R1 encountered by the multicast packet verifies the multicast source H1 by its own means, and adds this authentication information to the multicast packet before forwarding the latter. Further intermediate multicast routers R2, R3 and an ultimate router R4 do forward the original message to an exemplary destination host H3 and possibly add their own authentication information to the message. Any multicast destination host H3 uses the information added to the multicast message to verify the authenticity of the multicast source H1.

If there are more than two hosts H1, H2 on one and the same subnet, i.e. communicating without any intervening gateway router, the fact that e.g. destination host H2 does not receive any additional authentication information about the source host H1 may have to be taken into account.

Fig.2 illustrates how the various pieces of authentication information may be added to the header of a multicast packet. An exemplary chain of authentication information, contributed to the authentication header of the multicast packet by the intermediate routers located between the source and destination host, comprises the following fields and contents. In the first field, denoted "MAC 0", the source of the multicast packet may be required to write a source message authentication code MAC 0 using a common key known at least to the first router R1 encountered by the multicast packet, i.e. the gateway router on the same subnet as the packet sender H1, or even shared by all the members of the multicast group. This source MAC is a hash of the data to be authenticated, i.e. the message payload plus source and destination addresses.

The second field, denoted "AUTH 1", comprises the information that and possibly how the first router R1 has authenticated the multicast source H1, e.g. by verifying the content of the first header field "MAC 0". This packet source authentication information certifies that the message originates from a registered multicast sender on the first subnet. The field "AUTH 1" is appended to the data and included in the calculation of a message authentication code MAC 1 supplied by the router R1 and written to the field denoted "MAC 1". This code involves a separate router key known at least to the router R1 and possibly all its neighbouring routers R2, R7.

Every further intermediate router Ri adds further authentication information AUTH i certifying that Router Ri has itself, by evaluating the respective MACs or by any other means, authenticated the source, and/or has authenticated at least some or all intervening routers between the source and the further intermediate router Ri. This information is included in the calculation of a further message authentication code MAC i by router Ri. Calculating further MACs requires some cooperation of the multicast routers, but allows to protect the authentication scheme against compromised routers. This procedure is repeated for all routers up to the ultimate router Rn, i.e. the gateway router on the same subnet as the destination host. The latter therefore should know the key employed for the ultimate message authentication code MAC n in order to authenticate the ultimate router Rn.

Depending on the keys employed and their availability to the destination host, the latter may itself verify all the MACs added by the intermediate multicast-forwarding routers, or verify just the content of the ultimate field "MAC n" in order to authenticate the ultimate router Rn. Subsequently, and depending on the extent of the authentication information AUTH i included by the intermediate routers in the respective individual fields, the destination host evaluates the information from all the authentication fields of the received message, or restricts itself to the ultimate field "AUTH n" in order to authenticate the multicast source of the message received.

In the abovementioned embodiment, the steps of calculating any further message authentication codes apart from MAC n and, correspondingly, adding further authentication information apart from AUTH 1 may possibly be omitted if the routers are considered secure. On the other hand, the further message authentication codes may supplant the corresponding separate authentication information, i.e. the mere fact that a field "MAC i" is appended by the router Ri authenticates all the previous intervening routers as well as the source. In this case, the destination host only needs to evaluate the field "MAC n" of the ultimate router, and thus only needs to know the key employed by the latter. However, with such a binary identification, no detailed authentication information related to trust levels or failed authentication attempts is transmittable.

If the source or the intermediate routers Ri choose from several secret, common or router, keys for each transmission, the MAC fields may include further a key identifier (or a "Security Parameter Index" according to the IPSec standard header), indicating the particular key employed for generating the message authentication code currently written to the MAC field.

So far, the invention has been described in the context of a routed IP network of e.g. a wide-area type. However, and despite of the fact that local networks restricted to a physically secured environment may be considered to be less vulnerable to attacks, the invention is also applicable to switched Ethernet networks. On the Ethernet level, the routers and packets described above are denoted switches and frames, respectively, and the payload comprises for instance an Internet packet consisting of an IP header, a TCP header and user data. It is noted that the *Virtual* Local Area Network (VLAN) switches already add their own header information into multicast packets, in particular based on the port on which the multicast packet is received (port-based VLAN). The insertion of additional authentication information into Ethernet multicast packet headers is therefore a straightforward extension of the VLAN mechanism.

## Claims

1. A method of authenticating a source (H1) of a multicast message sent to a first router (R1) and intended for a plurality of receivers (H3, H4) of a routed network, comprising,
- by the first router (R1), authenticating the source (H1), adding corresponding authentication information (AUTH 1, MAC 1) to the message, and forwarding the multicast message towards the receivers (H3, H4), and,
- by the receivers (H3, H4), authenticating the first-router (R1),
**characterized in that** adding, by the first router (R1), corresponding authentication information to the message comprises appending an authentication field (AUTH 1) to the message comprising a level of trustworthiness of the authentication, by the first router (R1), of the source (H1).

2. The method according to claim 1, **characterized in that** it comprises,
- by the source (H1), calculating a Message Authentication Code (MAC 0) based on a source key,
- adding the Message Authentication Code (MAC 0) to the message, and,
- by the first router (R1), authenticating the source (H1) by verifying the Message Authentication Code (MAC 0).

3. The method according to claim 1, wherein the message is forwarded from the first router (R1) to a further router (Ri), comprising,
- by the further router (Ri), authenticating the first router (R1), adding corresponding authentication information (AUTH i, MAC i) to the message, and forwarding the multicast message towards the receivers (H3, H4), and,
- by the receiver (H3, H4), authenticating the further router (Ri).

4. The method according to claim 3, comprising,
- by the first (R1) or the further (Ri) router, adding a message authentication code (MAC 1, MAC i) to the message prior to forwarding the multicast message towards the receivers (H3, H4), and,
- by the further router (Ri) or the receivers (H3, H4), authenticating the first (R1) or the further (Ri) router by verifying said Message Authentication Code (MAC 1, MAC i).

5. The method according to claim 4, comprising,
- by the first (R1) or the further (Ri) router, calculating the message authentication code (MAC 1, MAC i) based on a router key that is different from the source key.

6. The method according to claim 3, comprising, by the further router (Ri), adding the corresponding authentication information to the message by appending an authentication field (AUTH i) to the message comprising a level of trustworthiness of the authentication.

7. The method according to claim 3, comprising, by the first (R1) or the further (Ri) router, adding corresponding positive authentication information to the message by appending a MAC field (MAC 1, MAC i) comprising a message authentication code.

8. A first router (R1) for routing multicast messages originating from a source (H1) and intended for a plurality of receivers (H3, H4) of a routed network, including means for authenticating the source (H1) of an incoming message, means for adding corresponding authentication information to the message including means for appending an authentication field (AUTH 1) to the message comprising a level of trustworthiness of the authentication of the source (H1), and means for forwarding the message towards the receivers (H3, H4).

9. The use of a router according to claim 8 as an Ethernet switch in a switched Ethernet network.

## Patentansprüche

1. Verfahren zum Authentifizieren einer Quelle (H1) einer Multicast-Nachricht, welche an einen ersten Router (R1) gesendet und für mehrere Empfänger (H3, H4) eines gerouteten Netzwerks beabsichtigt ist, umfassend,
- durch den ersten Router (R1), Authentifizieren der Quelle (H1), Hinzufügen entsprechender Authentifizierungsinformation (AUTH 1, MAC 1) zu der Nachricht, und Weiterleiten der Multicast-Nachricht zu den Empfängern (H3, H4), und
- durch die Empfänger (H3, H4), Authentifizieren des ersten Routers (R1),
**dadurch gekennzeichnet, dass** Hinzufügen, durch den ersten Router (R1), entsprechender Authentifizierungsinformation zu der Nachricht Anhängen eines Authentifizierungsfelds (AUTH 1) an die Nachricht umfasst, welches ein Vertrauenswürdigkeitsniveau der Authentifizierung umfasst, durch den ersten Router (R1), der Quelle (H1).

2. Verfahren nach Anspruch 1, **dadurch gekennzeichnet, dass** es umfasst,
- durch die Quelle (H1), Berechnen eines Nachricht-Authentifizierungscodes (MAC 0), basierend auf einem Quellenschlüssel,
- Hinzufügen des Nachricht-Authentifizierungscodes (MAC 0) zu der Nachricht, und
- durch den ersten Router (R1), Authentifizieren der Quelle (H1), durch Verifizieren des Nachricht-Authentifizierungscodes (MAC 0).

3. Verfahren nach Anspruch 1, wobei die Nachricht von dem ersten Router (R1) an einen weiteren Router (Ri) weitergeleitet wird, umfassend,
- durch den weiteren Router (Ri), Authentifizieren des ersten Routers (R1), Hinzufügen entsprechender Authentifizierungsinformation (AUTH i, MAC i) zu der Nachricht, und Weiterleiten der Multicast-Nachricht zu den Empfängern (H3, H4), und
- durch den Empfänger (H3, H4), Authentifizieren des weiteren Routers (Ri).

4. Verfahren nach Anspruch 3, umfassend,
- durch den ersten (R1) oder den weiteren (Ri) Router, Hinzufügen eines Nachricht-Authentifizierungscodes (MAC 1, MAC i) zu der Nachricht, vor Weiterleiten der Multicast-Nachricht zu den Empfängern (H3, H4), und
- durch den weiteren Router (Ri) oder die Empfänger (H3, H4), Authentifizieren des ersten (R1) oder des weiteren (Ri) Routers, durch Verifizieren des Nachricht-Authentifizierungscodes (MAC 1, MAC i).

5. Verfahren nach Anspruch 4, umfassend,
- durch den ersten (R1) oder den weiteren (Ri) Router, Berechnen des Nachricht-Authentifizierungscodes (MAC 1, MAC i), basierend auf einem Routerschlüssel, welcher anders ist als der Quellenschlüssel.

6. Verfahren nach Anspruch 3, umfassend, durch den weiteren Router (Ri), Hinzufügen der entsprechenden Authentifizierungsinformation zu der Nachricht, durch Anhängen eines Authentifizierungsfelds (AUTH i) an die Nachricht, welches ein Vertrauenswürdigkeitsniveau der Authentifizierung umfasst.

7. Verfahren nach Anspruch 3, umfassend, durch den ersten (R1) oder den weiteren (Ri) Router, Hinzufügen entsprechender positiver Authentifizierungsinformation zu der Nachricht, durch Anhängen eines MAC-Felds (MAC 1, MAC i), welches einen Nachricht-Authentifizierungscode umfasst.

8. Erster Router (R1), zum Routen von Multicast-Nachrichten, welche von einer Quelle (H1) ausgehen und für mehrere Empfänger (H3, H4) eines gerouteten Netzwerks beabsichtigt sind, welcher Mittel zum Authentifizieren der Quelle (H1) einer eingehenden Nachricht aufweist, Mittel zum Hinzufügen entsprechender Authentifizierungsinformation zu der Nachricht, welche Mittel zum Anhängen eines Authentifizierungsfelds (AUTH 1) an die Nachricht aufweisen, welches ein Vertrauenswürdigkeitsniveau der Authentifizierung der Quelle (H1) umfasst; und Mittel zum Weiterleiten der Nachricht zu den Empfängern (H3, H4).

9. Verwenden des Routers nach Anspruch 8 als einen Ethernet-Switch in einem Switched-Ethernet-Netzwerk.

## Revendications

1. Procédé pour l'authentification d'une source (H1) d'un message de multidiffusion envoyé à un premier routeur (R1) et destiné à une pluralité de récepteurs (H3, H4) d'un réseau routé, comprenant les étapes consistant à :
- par le premier routeur (R1), authentifier la source (H1), ajouter des informations d'authentification correspondantes (AUTH1, MAC1) au message, et transférer le message de multidiffusion aux récepteurs (H3, H4), et
- par les récepteurs (H3, H4), authentifier le premier routeur (R1),
**caractérisé en ce que** l'étape consistant à ajouter, par le premier routeur (R1), des informations d'authentification correspondantes au message comprend l'étape consistant à annexer un champ d'authentification (AUTH1) au message comprenant un niveau de fiabilité de l'authentification, par le premier routeur (R1), de la source (H1).

2. Procédé selon la revendication 1, **caractérisé en ce qu'**il comprend les étapes consistant à :
- par la source (H1), calculer un code d'authentification de message (MAC 0) sur la base d'une clé de source,
- ajouter le code d'authentification de message (MAC 0) au message, et
- par le premier routeur (R1), authentifier la source (H1) en vérifiant le code d'authentification de message (MAC 0).

3. Procédé selon la revendication 1, dans lequel le message est transféré du premier routeur (R1) à un autre routeur (Ri), comprenant les étapes consistant à :
- par l'autre routeur (Ri), authentifier le premier routeur (R1), ajouter des informations d'authentification correspondantes (AUTH i, MAC i) au message, et transférer le message de multidiffusion aux récepteurs (H3, H4), et
- par le récepteur (H3, H4), authentifier l'autre routeur (Ri).

4. Procédé selon la revendication 3, comprenant les étapes consistant à :
- par le premier routeur (R1) ou par l'autre routeur (Ri), ajouter un code d'authentification de message (MAC 1, MAC i) au message avant de transférer le message de multidiffusion aux récepteurs (H3, H4), et
- par l'autre routeur (Ri) ou les récepteurs (H3, H4), authentifier le premier routeur (R1) ou l'autre routeur (Ri) en vérifiant ledit code d'authentification de message (MAC 1, MAC i).

5. Procédé selon la revendication 4, comprenant l'étape consistant à :
- par le premier routeur (R1) ou par l'autre routeur (Ri), calculer le code d'authentification de message (MAC 1, MAC i) sur la base d'une clé de routeur qui est différente de la clé de source.

6. Procédé selon la revendication 3, comprenant l'étape consistant à, par l'autre routeur, ajouter les informations d'authentification correspondantes au message en annexant un champ d'authentification (AUTH i) au message comprenant un niveau de fiabilité de l'authentification.

7. Procédé selon la revendication 3, comprenant l'étape consistant à, par le premier routeur (R1) ou par l'autre routeur (Ri), ajouter des informations d'authentification positives correspondantes au message en annexant un champ MAC (MAC 1, MAC i) comprenant un code d'authentification de message.

8. Un premier routeur (R1) pour acheminer des messages de multidiffusion émanant d'une source (H1) et destinés à une pluralité de récepteurs (H3, H4) d'un réseau routé, comprenant des moyens pour authentifier la source (H1) d'un message entrant, des moyens pour ajouter des informations d'authentification correspondantes au message comprenant des moyens pour annexer un champ d'authentification (AUTH1) au message comprenant un niveau de fiabilité de l'authentification de la source (H1), et des moyens pour transférer le message aux récepteurs (H3, H4).

9. Utilisation d'un routeur selon la revendication 8 en tant que commutateur Ethernet dans un réseau Ethernet commuté.
